# EUROPEAN PATENT APPLICATION

(11) **EP 1 354 850 A2**
(43) Date of publication of application: **22.10.2003**
(21) Application number: 03007946.1
(22) Date of filing: 09.04.2003
(51) Int. Cl.: C01B 3/00

(54) **Method and apparatus for generation and refuelling of hydrogen in the automotive sector**

(30) Priority: 12.04.2002 IT PI20020024
(71) Applicant: ILT Technology S.r.L., 21100 Varese (IT)
(72) Inventor: Benedetti, Paola Simona, 56025 Pontedera (PI) (IT)
(74) Representative: Gritschneder, Martin, Dipl.-Phys.

(57) **Abstract**

A method for the generation and the refuelling of hydrogen in the automotive sector comprises steps of generation of hydrogen through electrolysis process, steps of purification of the hydrogen gas generated by said process, steps of compression of the gas and refuelling of cylinder tanks dedicated to the feeding of the vehicle propeller, the refuelling being done by using fast connection means and measuring means. An apparatus for implementing the above method comprises means for generating the hydrogen gas by which any risk of producing dangerous mixtures is avoided, means for purifying the hydrogen and for transferring it to cylinder tanks on the vehicles, means for measuring the transferred quantity.

## Description

### - Technical field

The present invention refers to a method, and corresponding apparatus, for the hydrogen generation and refuelling in the automotive sector.

Specifically, the invention concerns the refuelling of hydrogen in motor vehicles, wherein the gas generation is directly made at the user's facilities by a safe and automatic procedure.

### - Prior art information

The greater and greater problems regarding the environmental pollution caused by the road traffic, particularly in the inhabited centers, call for the searching of alternative solutions to the actual hydrocarbons based propellers, so to have vehicles which guarantee the complete absence of emissions (zero emission vehicles).

The currently available technologies to obtain the aforesaid purpose are, as known, the electric traction and the hydrogen based traction.

The causes that prevent the easy diffusion of the electric vehicles derive from the actual strong limitations connected to the systems of accumulation of the electric energy on board of the vehicle. Such systems are very expensive, bulky, heavy and have short life in respect of allowable number of recharging cycles; consequently, the actual electric vehicles offer low single-charge ranges and poor performances.

Further limitations are connected to the accumulators "management", so that the actual utilization of electric vehicles is restricted to fleets of vehicles, properly managed, in closed areas such as airports, hospitals, fairgrounds or other city areas supplied of specific recharging equipments.

The above problems of low range and poor performances are overcome by the hydrogen traction since, thanks to the calorific value and the specific weight of hydrogen, the quantity of this element that can be stored in gas cylinders housed on a car allows this one a range of 160 ÷ 180 km and a top speed of around 120 ÷ 130 km/h, so notably widening the field of application of these vehicles in comparison to that of the electric powered vehicles.

Further, if we consider that the hydrogen fed propellers are the same ones fed with traditional fuels, and that, therefore, the introduction in the practical use of the hydrogen based traction would not involve traumatic changes neither in the production lines, neither in assistance and distribution vehicles field and, besides, it would allow to a vehicle eventually equipped with hydrogen feeding system and with traditional fuel the same or greater ranges than those of the current vehicles, we easily realize the usefulness to find suitable solutions to the problems that, at this moment, are still to be solved for allowing the diffusion of this kind of traction, and exactly, the problems concerning the hydrogen generation and vehicles refuelling.

Hydrogen is, as known, widely used in various industrial processes, as for example, the hydrogenation of greases, the cracking of oils, and as fuel in high temperature ovens, or in the oxyhydrogen flame's production. It's also known that, whereas it needs in great quantities, it is produced on site, according to different techniques and processes, since, owing to the low density, it is not transportable at the same manner of the traditional fuels.

Excluding in fact, the exceptional transports of hydrogen at liquid state, during which it has to be maintained at -250°C, it's normally commercialized in steel cylinders, where it is compressed at high pressure values, 200÷300 bar, so to assure enough quantity for specific aims, such as, for example, that one of the welding in specialistic fields of thermal treatments, of sintering, of hydrogenation and other else.

It's obvious that in the automotive sector the distribution of the hydrogen according to the aforesaid technique would be feasible but, owing to the high volumes, it would meet great difficulties connected to the high costs of transport and to the logistic problems due to the management of the cylinders.

Neither, however, it seems feasible in said sector the generation on site according to the industrial methods mostly in use, as the water vapour or hydrocarbons decomposition, in particular methane, both for the specific knowledges needed to the using of such technologies, requiring specialized personnel, and for the low production flexibility associated to said technologies, that after all, countersigns the greater part of the industrial production processes in the chemical field.

Other element excluding the extension of the industrial processes of hydrogen production at diffused and local level is given by the fact that the concerned product is a fuel and that, therefore, all the measures and procedures to avoid its burning have to be effected, and particularly to avoid the combination of it with the oxygen; measures and procedures that at industrial level are normally adopted in systematic way, and that at local level have to be guaranteed however.

### - Summary of the invention

Main object of the present invention is to propose a method for the generation of hydrogen for automotive sector and for the vehicles refuelling on board, in distributed way and according to criterions of maximum safety.

Further object of the invention is to propose an extremely reliable and sure apparatus for the production of hydrogen and for the refuelling of the vehicle, made directly at user level.

These and other objects and advantages are achieved through a method of generation and refuelling of hydrogen on motor vehicles, comprising the steps of:
- hydrogen generation through an electrolytic cell in which the hydrogen and oxygen gases produced by the electrolysis process are treated according to separated treatment circuits including several means of cooling, anti-condensation, measuring and regulation of the production process;
- hydrogen gas purification, particularly from the oxygen gas;
- hydrogen gas compression to pressure around 200÷400 bar;
- hydrogen gas transfer to cylinders dedicated to the feeding of the vehicle propeller.

The method of the invention advantageously provides that the hydrogen transfer into tanks dedicated to the feeding of the vehicle propeller takes place using automatic connection means to avoid dispersions or leakages. Means for measuring the transferred quantity are provided along the hydrogen transfer line.

An apparatus for the generation and the refuelling of hydrogen on motor vehicles comprises:
- means of hydrogen generation by water electrolysis including separated circuits of treatment of the hydrogen and oxygen gases produced in the electrolysis process;
- means of purification of the hydrogen gas, particularly from the oxygen gas;
- means of compression of the hydrogen gas;
- means for transferring the hydrogen gas from said means of compression to cylinders dedicated to the feeding of the vehicle propeller.

The apparatus further includes an auxiliary buffer tank placed after said compression means and means for measuring the pressure and the quantity of gas flowing through said transfer means.

The advantages of the above method, and corresponding apparatus, are immediately evident, said method and said apparatus being a valid and practical solution to the above outlined problems of realization of the hydrogen based traction.

The feature of producing hydrogen for electrolysis according to processes and through apparatuses that guarantee the maximum safety degree makes able anyone who has available an electric supply point to reload the hydrogen cylinders of the motor vehicle during the periods of stopping. Obviously the production of hydrogen can also take place in any else period of time to reload cylinders that are subsequently replaceable to the cylinders housed on the vehicle.

Other considerable advantages follow from the complete automation of the electrolysis process and from the intrinsic cleanliness of the same one.

### - Description of preferred embodiments

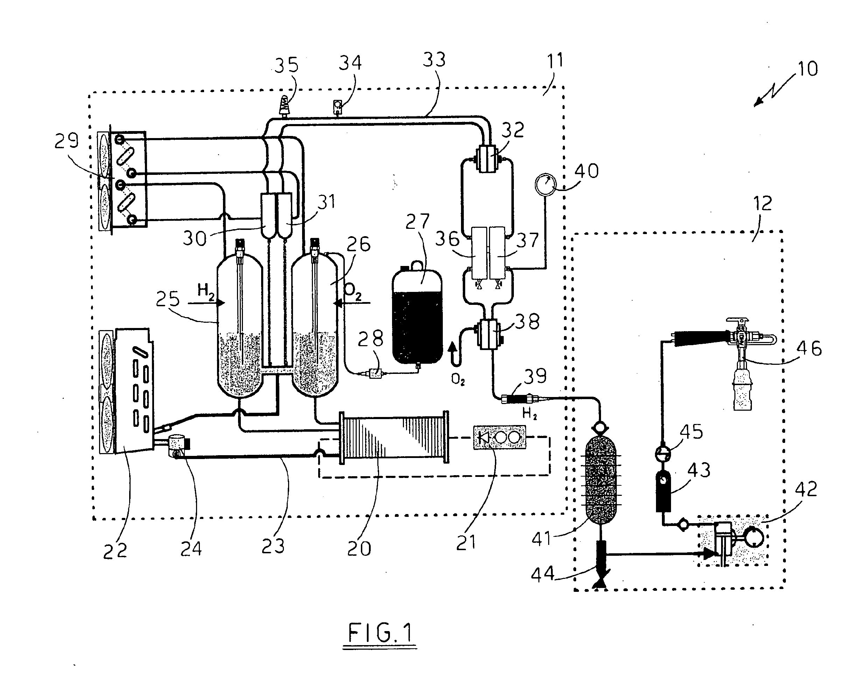

However, for a better understanding of the above-mentioned advantages and characteristics of the present invention, this will now be described by way of an embodiment example, with reference to the accompanying drawings, in which figure 1 schematically shows an apparatus used for the realization of the method of the invention.

In said figure, the apparatus, shown as a whole with 10, is composed of components and devices gathered in two separate areas, delimited by broken lines, 11, 12, respectively representing the part of generation of the hydrogen and the part of refuelling of the gas in the feeding tanks, not shown in figure for simplicity of representation.

The two parts 11, 12, can physically be displaced in an only cabinet or in two or more separate cabinets; the subdivision operated in figure is just indicative of the different function of the two parts.

With reference to the part, 11, dedicated to the hydrogen generation, it is marked with 20 an electolyser cell electrically fed by a power rectifier group, 21. The electrolyte that circulates in said cell 20, which is a bipolar type in this embodiment of the invention, is opportunely cooled through an heat exchanger, 22, placed in the liquid circuit, 23, in which a pump, 24, assures the recycle of the same electrolyte among the cell 20 and the two chambers, 25, 26, respectively dedicated to the separated accumulation of hydrogen gas and of oxygen gas generated in said cell 20.

The electrolyte reaches said two chambers 25, 26, both from the tank, 27, of demineralized water, through the charging pump 28, both from the separation of the two gases, which exit from the electrolyser cell partially mixed to the same electrolyte; note that the separation takes place in each one of the two chambers 25, 26.

The gases formed in said chambers are cooled through an heat exchanger, 29, which is a separated circuits type. The water vapour that it produces in said cooling process is subsequently deposited in decondensation chambers, 30, 31.

The two gases are then forwarded to a balancing device, 32, which is apt to respond to any difference of pressure among the circuits of the two gases, and to balance the values of pressure through a tapping of the gas from the greater pressure circuit. In the section, 33, of the hydrogen circuit that connects the chamber, 30, to said balancing device 32, a pressure transducer, 34 and a safety valve, 35, are situated, the transducer being used for controlling the whole process, providing the information about the value of hydrogen pressure to the control circuit of the electrolytic cell, while, the valve 35 provides a securing leakage in the case that said hydrogen pressure had to pass a prefixed maximum value.

At the exit of the balancing device, 32, the two gases are forwarded separately to two collectors, 36, 37, for draining the condensed steam and finally, to a disproportioning device, 38, from which the oxygen gas is discharged outside, while the hydrogen gas passes through so to reach the safety antiflame valve, 39, placed just next to the point of connection between the section of generation 11 and the section of refuelling 12 of the apparatus 10.

To complete the description of the generation section, 11, we see that a manometer, 40, is placed in proximity of the condensation draining collector, 37, in the circuit of hydrogen, to display the final pressure value of this gas.

A first component, placed at the entry of the refuelling section, 12, is constituted by a device, 41, for purifying the hydrogen. It is, in particular, a palladium salt type absorber, which provides to remove any residue of oxygen in the circuit of hydrogen gas. The gas, so purified, is then compressed to high pressure through the compressor 42, an opportune buffer tank, 43, being located at the exit of said compressor 42 to assure the proper triggering off and working of the compressor, while, a condensed steam collector, 44, is placed at the exit of the purifier 41 to allow to remove the condensed steam formed inside the same purifier during the purification of the hydrogen from the residues of oxygen. A manometer, 45, is provided at the exit of tank 43 for a pressure checking of the gas, which is deliverable toward the external cylinders through a quick fixing connector, 46.

Means for measuring the delivered quantity can obviously be positioned in proximity of the manometer 45, before the connector 46, or, conveniently, they can belong to the same supply connector .

The process of generation and refuelling of hydrogen by means of the above described apparatus is completely automatic.

The apparatus, when opportunely supplied by electric power and set up, starts the electrolysis process up to bring the pressure in the hydrogen circuit to a well determined value, the feeding power of the cell 20 being regulated, by the rectifier group, 21, to maintain said pressure value detected by the electronic transducer, 34. At the same time the compressor, 42, assures, in the buffer tank 43, a pressure of around 200÷400 bar.

When the supply connector, 46, is connected to the tank cylinder on the vehicle, the buffer tank, 43, begins to empty, so causing a decrease of the pressure inside, and this causes, in turn, the triggering of the compressor, 42, and the discharging of the hydrogen circuit of the generation section, 11. The pressure reduction in the hydrogen circuit, descending from the above, is quickly detected by the transducer 34, which, according to what above said, causes a suitable control of the electrolytic cell 20 to restore in said circuit the prescribed pressure value.

The amount of hydrogen continuously generated by the apparatus 10 can obviously vary according to the power of the same apparatus, with respect to the different demands of the users. As standard, the apparatus potentiality is such to assure, within the period usually dedicated to the night-time stopping of the vehicle, the recharge of the hydrogen cylinders on said vehicle; but, obviously, the above potentiality of generation can be greater, to satisfy several users demands in the same period, or it can be lower, to guarantee the recharge within a 24 hours period and to fill, with absence of the vehicle, auxiliary cylinders.

Obviously the above modifications can be made nevertheless saving the advantages associated to the method and apparatus of the invention, as well other modifications can be made to the described embodiment of the present invention without departure from the scope of the invention.

The connection scheme of the various devices of the generation section 11 might, for example, be varied still being separated the circuits of the two gases, hydrogen and oxygen; the electrolyte might include solutions of sodic chloride or hydroxide of potassium or others different solutions; the two sections of the apparatus 10 can be housed in only one, or more, structures; the purification device, 41, might obviously include a different chemical catalyst; also the separators of condensed steam 31, 36, 37, 44, might obviously be of various kind.

Obviously, other modifications to what described and shown may be carried out, within the limits of the invention as defined in the appended claims, and any reference numbers in the claims have the purpose of facilitating the reading of the claims with reference to the description and to the drawings, and do not limit the sphere of protection offered by the claims.

## Claims

1. Method for the generation and the refuelling of hydrogen on motor vehicles **characterized in that** it comprises the steps of:
- generation of hydrogen through electrolytic cell in which the hydrogen and oxygen gases produced by the electrolysis process are treated according to separated treatment circuits,
- purification of the hydrogen gas;
- compression of the hydrogen gas;
- transfer of the hydrogen gas to cylinders dedicated to the feeding of the propeller of the vehicle, said cylinders being directly placed on the vehicle or apart.

2. Method according to claim 1 **characterized in that** said treatment process of the hydrogen and oxygen gases according to separated circuits comprises steps of separation of the gases from the electrolyte, steps of cooling said gases and steps of separation of condensed steam from the gases.

3. Method according to claim 1 or 2 **characterized by** the fact that said purification of the hydrogen gas is accomplished by removing any residue of oxygen gas.

4. Method according to the preceding claims **characterized by** the fact that said transfer of the hydrogen to cylinders dedicated to the feeding of the propeller of the vehicle is done by using connection means apt to avoid dispersions or leakages and means for measuring the transferred quantity.

5. Apparatus for the generation and the refuelling of hydrogen on motor vehicles **characterized in that** it comprises:
- means of generation of the hydrogen by water electrolysis comprising separated treatment circuits of the hydrogen and oxygen gases produced in the electrolysis process;
- means of purification of the hydrogen gas;
- means of compression of the hydrogen gas;
- means of transfer of the hydrogen gas from said means of compression to cylinders dedicated to the feeding of the propeller of the vehicle, said cylinders being placed directly on the vehicle or apart.

6. Apparatus according to claim 5 **characterized in that** it comprises, in said separated treatment circuits of the hydrogen and oxygen gases,:
- chambers (25) (26) for separating from the electrolyte the gases produced in said electrolysis process;
- heat exchangers (29) for cooling said gases;
- decondensation chambers (30), (31);
- devices (32) for balancing the pressure of said two circuits;
- condensed steam collectors (36), (37)
- discharging devices (38) of the oxygen gas toward the outside.

7. Apparatus according to claim 5 or 6 **characterized in that** it comprises a buffer tank (43) positioned at the exit of said means of compression (42) of the hydrogen gas and means for measuring the pressure and the quantity of gas flowing through said transfer means.

8. Apparatus according to claim 5 or 6 **characterized by** the fact that said means of purification (41) of the hydrogen gas comprise a chemical absorber of the oxygen gas.
